(19) Europäisches Patentamt / European Patent Office / Office européen des brevets

(11) **EP 3 165 489 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **16195583.6**

(22) Anmeldetag: **25.10.2016**

(51) Int Cl.:
*B65H 54/71* (2006.01)     *B23K 26/06* (2014.01)
*B23K 26/03* (2006.01)     *B23K 26/073* (2006.01)
*B23K 26/38* (2014.01)     *B23K 26/40* (2014.01)
*B23K 26/0622* (2014.01)    *B23K 101/32* (2006.01)
*B23K 103/00* (2006.01)

(54) **VERFAHREN UND VORRICHTUNG ZUM SCHNEIDEN EINES LAUFENDEN FADENS**

METHOD AND DEVICE FOR CUTTING A RUNNING THREAD

PROCÉDÉ ET DISPOSITIF DESTINÉS À COUPER UN FIL CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015014297**

(43) Veröffentlichungstag der Anmeldung:
**10.05.2017 Patentblatt 2017/19**

(73) Patentinhaber: **Saurer Spinning Solutions GmbH & Co. KG**
**52531 Übach-Palenberg (DE)**

(72) Erfinder:
• **Rienas, Gerhard**
**52525 Heinsberg (DE)**
• **Fechter, Ulrich**
**41236 Mönchengladbach (DE)**
• **Wehrheit, Dr. Patrick**
**52066 Aachen (DE)**

(74) Vertreter: **Schniedermeyer, Markus**
**Saurer Spinning Solutions GmbH & Co. KG**
**Patentabteilung**
**Carlstraße 60**
**52531 Übach-Palenberg (DE)**

(56) Entgegenhaltungen:
**DE-A1- 19 640 184     DE-A1- 19 941 784**

EP 3 165 489 B1

**Beschreibung**

Die vorliegende Erfindung betrifft ein Verfahren zum Schneiden eines laufenden Fadens und eine Vorrichtung mit Mitteln zur Führung und zum Schneiden eines laufenden Fadens.

Zum Schneiden eines laufenden Fadens sind verschiedene Anordnungen bekannt. In einer einfachen Ausführung wird der Faden zwischen einem Schneidmesser und einem Amboss geführt. Die Schneidkante des Schneidmessers verläuft dabei quer zur Fadenlaufrichtung. Zum Schneiden des Fadens wird das Schneidmesser elektromagnetisch oder pneumatisch gegen den Amboss bewegt. Die Bewegung gegen den Amboss führt zu einem hohen Verschleiß der Schneidkante, das heißt, das Messer wird mit der Zeit stumpf.

Die DE 100 50 692 A1 offenbart eine alternative Schneideinrichtung für einen laufenden Faden. Dabei wird gleichzeitig der Faden mittels eines Klemmmittels gegen eine Schneidplatte gedrückt und das Schneidmesser gleitet entlang der Stirnfläche der Schneidplatte und durchtrennt dabei den laufenden Faden.

Die bekannten Lösungen zum Schneiden eines Fadens sind mechanische Einrichtungen, die sich eines Schneidmessers bedienen. Das Auslösen des Schneidvorganges geschieht damit langsam, beziehungsweise verzögert, da das Schneidmesser eine träge Masse darstellt, die bewegt werden muss. Alle mechanischen, beweglichen Teile der Schneideinrichtung unterliegen zwangsläufig einem Verschleiß.

Solche Schneideinrichtungen finden zum Beispiel Anwendung an Arbeitsstellen von Spulmaschinen, wie sie zum Beispiel in der DE 196 40 184 A1 offenbart sind. Der Faden wird dabei von einer Ablaufspule, beispielsweise einem Kops, abgezogen und mittels einer Spuleinrichtung auf eine Auflaufspule, beispielsweise eine Kreuzspule, gewickelt. Der laufende Faden wird durch den Messkopf eines Garnreinigers und durch eine Schneideinrichtung geführt. Der Garnreiniger erfasst eine die Qualität des Fadens repräsentierte Messgröße. Wenn der Garnreiniger einen nicht tolerierbaren Fehler detektiert, das heißt, wenn die Messgröße von vorgegebenen Werten abweicht, wird von dem Garnreiniger ein sogenannter Reinigerschnitt ausgelöst, das heißt, die Schneideinrichtung wird aktiviert, um den fehlerbehafteten Teil des Fadens zu entfernen. Nach dem Schneiden des Fadens läuft das Fadenende mit dem fehlerbehafteten Teil auf die Auflaufspule auf. Das Fadenende wird von einer schwenkbaren Saugdüse erfasst und das fehlerhafte Fadenstück abgesaugt. Der von der Auflaufspule kommende Oberfaden wird in eine Fadenverbindungseinrichtung eingelegt und das fehlerhafte Fadenstück abgeschnitten. Entsprechend wird der von der Ablaufspule kommende Unterfaden mittels eines schwenkbaren Greiferrohres in die Fadenverbindungseinrichtung eingelegt und eine Fadenverbindung hergestellt.

Schneideinrichtungen zum Schneiden eines laufenden Fadens sind außerdem aus Offenend-Rotorspinnmaschinen bekannt. An einer Arbeitsstelle einer Offenend-Rotorspinnmaschine wird ein Faden aus einer Offenend-Spinneinrichtung abgezogen und mittels einer Spuleinrichtung auf eine Auflaufspule, vorzugsweise eine Kreuzspule, gewickelt. Die Schneideinrichtung kann ebenfalls im Zusammenhang mit einem Garnreiniger oder zur Vorbereitung des Fadenendes zum Wiederanspinnen nach einem Fadenbruch verwendet werden.

Sofern der Faden auf eine Kreuzspule gewickelt wird, werden Spulmaschinen und Offenend-Rotorspinnmaschinen auch als Kreuzspulen herstellende Textilmaschine bezeichnet.

Die DE 199 41 784 A1 offenbart eine Webmaschine mit einer Vorrichtung zum Abtrennen eines für einen Schusseintrag bereitgehaltenen Schussfadens von einem bereits an ein Gewebe angeschlagenen Schussfaden, wobei die Vorrichtung zum Abtrennen als gepulst betriebener Laser ausgeführt ist, wobei der Laser mit einem optischen System ausgerüstet ist, das einen ausgesandten Laserstrahl zu einem Flachstrahl umformt.

Es ist die Aufgabe der vorliegenden Erfindung, ein Verfahren und eine Vorrichtung zu schaffen, die ein schnelles, zuverlässiges und verschleißfreies Trennen eines laufenden Fadens ermöglichen.

Die Aufgabe wird erfindungsgemäß durch die kennzeichnenden Merkmale des Verfahrensanspruchs 1 sowie des Vorrichtungsanspruchs 8 gelöst. Vorteilhafte Weiterbildungen der Erfindung sind Gegenstand der Unteransprüche.

Zur Lösung der Aufgabe wird ein zeitlich gepulster Laserstrahl mittels eines optischen Elementes, vorzugsweise eine Fokussierlinse oder ein entsprechendes Linsensystem, gebündelt und der laufende Faden durch den Bereich geführt, auf den der Laserstrahl gebündelt wird.

Erfindungsgemäß wird also der Faden mittels eines Laserstrahls geschnitten. Das Bündeln des Laserstrahls ist notwendig, um die erforderliche Leistungsdichte zum Schneiden zu erreichen. Das Schneiden mittels Laser erfolgt berührungslos und damit quasi verschleißfrei. Ein Laserstrahl setzt sich physikalisch betrachtet aus Photonen zusammen. Photonen stellen keine Masse im klassischen Sinne dar und haben damit auch keine Trägheit. Der Schnittprozess wird damit quasi instantan, das heißt sofort, eingeleitet. Beim Schneidvorgang mittels des Laserstrahls wird der Faden nicht durch eine zusätzliche Zugkraft beaufschlagt, die bei mechanischen Lösungen zwangsläufig durch das Klemmen des Fadens entsteht. Somit wird eine unkontrollierte Bewegung des Fadens durch die schlagartige Entladung der Fadenspannung nach dem Schnitt vermieden.

Erfindungsgemäß wird der Laserstrahl zeitlich gepulst und ist damit als Laserburst ausgebildet. Ein Laserburst ist eine zeitliche Abfolge von Laserpulsen. Die Form des Laserbursts ist durch seine zeitliche Gesamtlänge, den Interpulsabstand und die Pulsform bestimmt. Laserlicht ist räumlich gerichtet und kann im gepulsten Betrieb bei örtlicher Fokussierung hohe Leistungsdichten erreichen. Die Laserpulse ermöglichen damit einen schnellen und zuverlässigen Schnitt des laufenden Fadens.

Gemäß einer möglichen Ausführungsform des erfindungsgemäßen Verfahrens kann das optische Element den Laserstrahl auf einen Brennpunkt bündeln und der laufende Faden durch den Brennpunkt geführt werden.

Gemäß einer alternativen Ausführungsform kann das optische Element den Laserstrahl auf eine Brennlinie bündeln und der laufende Faden die Brennlinie kreuzen. Durch eine solche Bündelung des Laserstrahls wird das Verfahren toleranter gegenüber Bewegungen des Fadens aus seinem definierten Fadenlauf heraus.

Vorzugsweise wird der Laserstrahl vor dem Bündeln kollimiert. Dadurch wird das Bündeln des Laserstrahls vereinfacht.

Gemäß dem erfindungsgemäßen Verfahren wird die Form des Laserbursts in Abhängigkeit von den Eigenschaften des Fadens angepasst. Das heißt, die Form des Laserbursts kann bei einem dicken Faden anders gestaltet

sein als bei einem dünnen Faden, oder bei einem Faden aus Naturfasern anders als bei einem Faden aus synthetischen Fasern. So kann immer ein optimales Schnittergebnis erzielt werden.

Die Zentralwellenlänge des Laserstrahls kann im Bereich des ultravioletten, des sichtbaren oder des infraroten Teils des elektromagnetischen Spektrums liegen.

Die Laserstrahlen werden von dem Faden absorbiert und gestreut. Damit ermöglicht die Erfassung der von dem Faden gestreuten Laserstrahlen, den Erfolg des Schneidens zu überwachen. Falls erforderlich, kann der Schneidvorgang wiederholt werden oder die Intensität des Laserstrahls oder die Form des Laserbursts kann angepasst werden. Zum Schneiden erfolgt die Anpassung derart, dass die Leistungsdichten entsprechend erhöht werden. Wird die Leistungsdichte des Lasers reduziert, ermöglicht die Erfassung des von dem Laserstrahl gestreuten Lichtes gleichzeitig eine Fadenbruchüberwachung.

Gemäß einer besonders vorteilhaften Ausführungsform des erfindungsgemäßen Verfahrens kann eine die Qualität des laufenden Fadens repräsentierende Messgröße laufend erfasst und der Faden in Abhängigkeit von Abweichungen der Messgröße von vorgegebenen Werten mittels des Laserstrahls geschnitten werden. Das heißt, das Schneiden des Fadens mittels eines Laserstrahls kann vorteilhafterweise in Verbindung mit der Ausreinigung eines Fadens zur Anwendung kommen.

Die Aufgabe wird außerdem durch eine Vorrichtung mit Mitteln zur Führung und zum Schneiden eines laufenden Fadens gelöst. Erfindungsgemäß umfassen die Mittel zum Schneiden des laufenden Fadens eine Laserstrahlquelle und ein optisches Element. Die Laserstrahlquelle und das optische Element sind so angeordnet und ausgebildet, dass ein von der Laserstrahlquelle ausgesendeter Laserstrahl von dem optischen Element gebündelt wird. Ferner sind die Mittel zur Führung des laufenden Fadens dazu ausgebildet, den laufenden Faden durch den Bereich zu führen, auf den der Laserstrahl gebündelt wird, und eine Steuereinrichtung ist dazu ausgebildet, bei Bedarf die Laserstrahlquelle zu aktivieren, um den Faden zu schneiden. Die Laserstrahlquelle weist erfindungsgemäß eine Anschaltelektronik auf, die zur Erzeugung eines Laserbursts, das heißt, eines zeitlich gepulsten Laserstrahls, ausgebildet ist.

Das optische Element kann zum Beispiel eine sphärische Linse umfassen. Eine sphärische Linse bündelt den Laserstrahl auf einen Brennpunkt.

Das optische Element kann vorzugsweise auch eine Zylinderlinse umfassen. Eine Zylinderlinse bündelt den Laserstrahl auf eine Brennlinie. Daraus ergeben sich die bereits beschriebenen Vorteile.

Die Vorrichtung kann vorzugsweise einen Kollimator umfassen, wobei die Laserstrahlquelle, der Kollimator und das optische Element so angeordnet und ausgebildet sind, dass ein von der Laserstrahlquelle ausgesendeter Laserstrahl von dem Kollimator kollimiert und der kollimierte Laserstrahl von dem optischen Element gebündelt wird.

Die Anschaltelektronik ist erfindungsgemäß zur Einstellung der Form des Laserbursts ausgebildet sein. Damit ist beispielsweise eine Anpassung des Laserbursts an die Eigenschaften des Fadens möglich.

Auf der dem optischen Element abgewandten Seite des Bereichs, auf den der Laserstrahl gebündelt wird, kann ein lichtempfindlicher Empfänger, beispielsweise eine Fotodiode angeordnet sein. Damit können von dem Faden gestreute Laserstrahlen erfasst werden; damit kann der Erfolg der Garntrennung überwacht werden. Bei entsprechender Anpassung des Laserbursts durch die Anschaltelektronik kann die Anordnung auch zur Fadenbruchüberwachung verwendet werden.

Die Mittel zur Führung des Fadens können eine Spuleinrichtung zum Wickeln des Fadens auf eine Auflaufspule umfassen. Damit kann die erfindungsgemäße Vorrichtung beispielsweise als Arbeitsstelle einer Kreuzspulen herstellenden Textilmaschine ausgebildet sein, die eine Spuleinrichtung zum Wickeln des Fadens auf eine Kreuzspule aufweist, wobei die erfindungsgemäßen Mittel zum Schneiden des laufenden Fadens an der Arbeitsstelle angeordnet sind.

Die Mittel zur Führung des Fadens können darüber hinaus zum Abziehen des Fadens von einer Ablaufspule ausgebildet sein. Die Mittel zur Führung des Fadens können damit Teil einer Arbeitsstelle einer Spulmaschine sein. Oder anders ausgedrückt, die erfindungsgemäße Vorrichtung kann als Arbeitsstelle einer Spulmaschine ausgebildet sein, wobei die Arbeitsstelle eine Spuleinrichtung zum Wickeln eines Fadens auf eine Auflaufspule, insbesondere eine Kreuzspule, aufweist, die Arbeitsstelle dazu ausgebildet ist, einen Faden von einer Ablaufspule abzuziehen, und die erfindungsgemäßen Mittel zum Schneiden des laufenden Fadens an der Arbeitsstelle angeordnet sind.

Die erfindungsgemäße Vorrichtung kann auch als Arbeitsstelle einer Offenend-Rotorspinnmaschine ausgebildet sein, wobei die Arbeitsstelle eine Spuleinrichtung zum Wickeln eines Fadens auf eine Auflaufspule, insbesondere eine Kreuzspule, aufweist, die Arbeitsstelle eine Offenend-Spinneinrichtung aufweist und dazu ausgebildet ist, einen Faden aus der Offenend-Spinneinrichtung abzuziehen, und die erfindungsgemäßen Mittel zum Schneiden des laufenden Fadens an der Arbeitsstelle angeordnet sind.

Die erfindungsgemäße Vorrichtung kann einen Garnreiniger zur Erfassung einer die Qualität des laufenden Fadens repräsentierenden Messgröße umfassen. Dabei ist die Steuereinrichtung dazu ausgebildet, in Abhängigkeit von Abweichungen der Messgröße von vorgegebenen Werten die Laserstrahlquelle zum Schneiden des Fadens zu aktivieren.

Der Gamreiniger und die erfindungsgemäßen Mittel zum Schneiden des laufenden Fadens können vorzugsweise an einer Arbeitsstelle einer Kreuzspulen herstellenden Textilmaschine, einer Spulmaschine oder eine Offenend-Rotorspinnmaschine angeordnet sein.

Die Erfindung wird nachfolgend anhand eines in den Zeichnungen dargestellten Ausführungsbeispiels näher erläutert.

Es zeigen:

Fig. 1    eine Arbeitsstelle einer Spulmaschine;

Fig. 2    eine erste Ausführungsform einer erfindungsgemäßen Vorrichtung zum Schneiden eines laufenden Fadens;

Fig. 3    eine zweite Ausführungsform einer erfindungsgemäßen Vorrichtung zum Schneiden eines laufenden Fadens;

Fig. 4    eine zeitlichen Verlauf der Laserpulse eines Laserbursts.

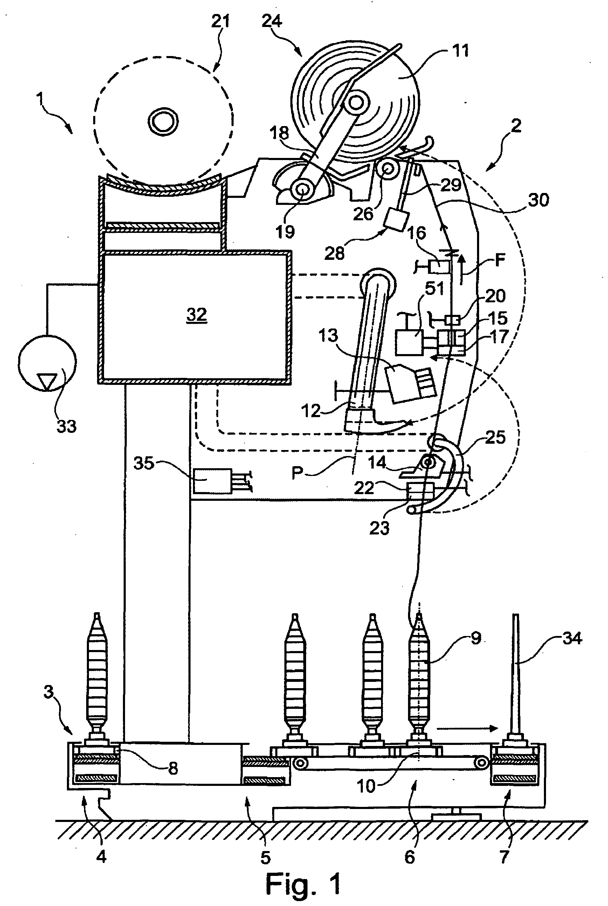

In Fig. 1 ist in Seitenansicht schematisch eine Arbeitsstelle 2 einer Spulmaschine 1. im Ausführungsbeispiel ein so genannter Kreuzspulautomat während des Spulprozesses dargestellt. Derartige Kreuzspulautomaten 1 weisen zwischen ihren (nicht dargestellten) Endgestellen eine Vielzahl gleichartiger Arbeitsstellen 2, sogenannte Spulstellen, auf.

Auf diesen Spulstellen 2 werden, wie bekannt und daher nicht näher erläutert, Vorlagespulen, in der Regel auf Ringspinnmaschinen produzierte Spinnkopse 9, die nur relativ wenig Gammaterial aufweisen, zu großvolumigen Kreuzspulen 11 umgespult. Die fertigen Kreuzspulen 11 werden anschließend mittels eines selbsttätig arbeitenden Serviceaggregates, beispielsweise eines Kreuzspulenwechslers, auf eine maschinenlange Kreuzspulentransporteinrichtung 21 übergeben und zu einer maschinenendseitig angeordneten Spulenverladestation oder dergleichen transportiert.

Solche Kreuzspulautomaten sind außerdem entweder mit einem Rundmagazin ausgestattet, in dem Spinnkopse bevorratet werden können, oder die Kreuzspulautomaten weisen eine Logistikeinrichtung in Form eines Spulen- und Hülsentransportsystems 3 auf. In einem solchen Spulen- und Hülsentransportsystem 3 laufen dann Spinnkopse 9 beziehungsweise Leerhülsen 34 um, die in vertikaler Ausrichtung auf Transporttellern 8 angeordnet sind. Von diesem Hülsentransportsystem 3 sind lediglich die Kopszuführstrecke 4, die reversierend antreibbare Speicherstrecke 5, eine der zu den Spulstellen 2 führenden Quertransportstrecken 6 sowie die Hülsenrückführstrecke 7 dargestellt. Wie angedeutet, werden die angelieferten Spinnkopse 9 dabei zunächst in einer Abspulstellung 10, die sich im Bereich der Quertransportstrecken 6 an den Spulstellen 2 befindet, positioniert und anschließend umgespult. Der Faden 30 läuft beim Spulen in Richtung des Pfeils F.

Die einzelnen Arbeitsstellen 2 verfügen zu diesem Zweck, wie bekannt und daher nur angedeutet, über verschiedene Fadenüberwachungs- und -behandlungseinrichtungen, die nicht nur gewährleisten, dass die Spinnkopse 9 zu großvolumigen Kreuzspulen 11 umgespult werden können, sondern die auch sicherstellen, dass der Faden 30 während des Umspulvorganges auf Fadenfehler hin überwacht wird und detektierte Fadenfehler ausgereinigt werden. Jede Arbeitsstelle 2 verfügt über eine Arbeitsstellensteuerung 35, die über die nur angedeuteten Steuerleitungen mit den Fadenüberwachungs- und Fadenbehandlungseinrichtungen verbunden ist.

Die Arbeitsstellen 2 verfügen beispielsweise jeweils über eine Spuleinrichtung 24, die einen Spulenrahmen 18 aufweist, der um eine Schwenkachse 19 beweglich gelagert ist und mit einer Spulenantriebseinrichtung 26 sowie einer Fadenchanglerelnrlchtung 28 ausgestattet ist.

Bei dem dargestellten Ausführungsbeispiel liegt die Kreuzspule 11 während des Spulprozesses mit ihrer Oberfläche auf einer Antriebswalze 26 und wird von dieser über Reibschluss mitgenommen. Die Antriebswalze 26 wird dabei über eine drehzahiregelbare, reversierbare (nicht dargestellte) Antriebseinrichtung beaufschlagt. Die Changierung des Fadens 30 beim Auflaufen auf die Kreuzspule 11 erfolgt mittels einer Fadenchangiereinrichtung 28, die im vorliegenden Ausführungsbeispiel einen Fingerfadenführer 29 aufweist.

Die Spulstelle 2 verfügt des Weiteren über eine Fadenverbindungseinrichtung, vorzugsweise eine pneumatisch arbeitende Spleißeinrichtung 13, einen Fadenspanner 14, einen Gamreiniger 15 mit einer Fadenschneideinrichtung 17, einen Fadenzugkraftsensor 20 sowie eine Paraffiniereinrichtung 16. In Fadenlaufrichtung vor dem Fadenspanner 14, also aus Sicht des Bedieners unter dem Fadenspanner 14, sind ein Vorreiniger 22 und eine Vorrichtung 23 zum Aufhalten von Fadenschlingen angeordnet. Dabei ist die Vorrichtung 23 in Fadenlaufrichtung vor dem Vorreiniger 22 angeordnet.

Der Gamreiniger 15 überwacht die Qualität des laufenden Fadens 30. Dazu wird eine die Qualität des laufenden Fadens repräsentierende Messgröße erfasst. Eine solche Messgröße kann zum Beispiel eine Durchmesserabweichung des Fadens 30 sein. Die Messwerte des Gamreinigers werden von der Steuereinrichtung 51 ausgewertet und auf Abweichungen von vorgegebenen Werten überprüft. Die Steuereinrichtung 51 steuert in Abhängigkeit von Abweichungen der Messgröße von vorgegebenen Werten die Fadenschneideinrichtung 17 an und löst damit einen sogenannten Reinigerschnitt aus.

Außerdem ist die Spulstelle 2 mit einer schwenkbaren Saugdüse 12 sowie mit einem schwenkbaren Greiferrohr 25 ausgestattet, die beide definiert mit Unterdruck beaufschlagbar sind. Die Saugdüse 12 und das Grelferrohr 25 sind dabei an eine maschinenlange Unterdrucktraverse 32 des Kreuzspulautomaten 1 angeschlossen, die ihrerseits mit einer Unterdruckquelle 33 in Verbindung steht. Mittels der Saugdüse 12 kann ein auf die Kreuzspule 11 aufgelaufener Faden erfasst und in den Bereich der Spleißeinrichtung 13 transportiert werden. Das Greiferrohr 25 ist dazu ausgebildet, einen in dem Fadenspanner 14 gehaltenen Faden aufzunehmen und ebenfalls in die Spleißeinrichtung 13 einzulegen.

Nach einem Reinigerschnitt läuft das obere Fadenende auf die Kreuzspule 11 auf. Das untere Fadenende wird in dem Fadenspanner 14 gehalten. Zur Wiederherstellung des Spulprozesses wird die Saugdüse 12 aus ihrer Parkstellung P in Richtung der Kreuzspule 11 geschwenkt. Das Fadenende wird von der Saugdüse 12 erfasst und das fehlerhafte Fadenstück abgesaugt. Die Saugdüse 12 wird wieder in die Parkposition P geschwenkt und der obere Faden dabei in die Spleißeinrichtung 13 eingelegt. Das überschüssige Fadenende wird mittels einer nicht dargestellten Schneideinrichtung der Spleißeinrichtung 13 geschnitten und von der Saugdüse 12 eingesaugt. Entsprechend wird das untere Fadenende von dem Greiferrohr 25 in die Spleißeinrichtung 13 eingelegt. Auch hier wird das überschüssige Fadenende mittels einer weiteren nicht dargestellten Schneideinrichtung geschnitten. Die Spleißeinrichtung 13 stellt die Fadenverbindung her und der Spulprozess wird fortgesetzt.

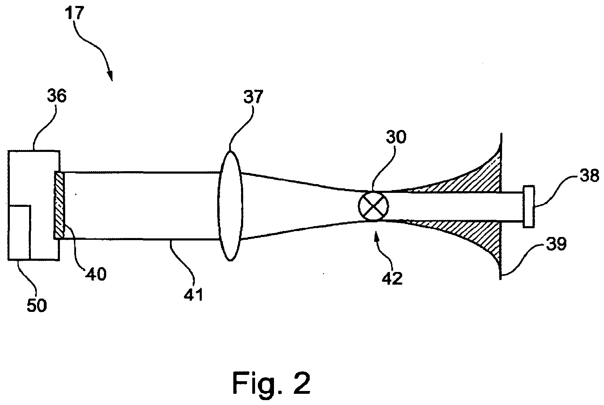

Die Fig. 2 zeigt einen möglichen Aufbau der Fadenschneideinrichtung 17. Wesentlicher Bestandteil der Fadenschneideinrichtung 17 ist die Laserstrahlquelle 36. Die Laserstrahlquelle 36 ist vorzugsweise als Halbleiterlaser ausgebildet. Am Ausgang der Laserstrahlquelle 36 ist ein Kollimator 40 angeordnet, der den Laserstrahl 41 kollimiert, beziehungsweise parallelisiert. Das Laserlicht kann außerdem durch die Laserstrahlquelle 36 selbst oder durch ein nachgeschaltetes optisches Element linear polarisiert werden, so dass die Polarisationsebene des elektrischen Feldvektors parallel zur Fadenlaufrichtung liegt. Der kollimierte Laserstrahl trifft auf die Fokussierlinse 37, die in dem gezeigten Ausführungsbeispiel als sphärische Linse ausgebildet ist. Die Linse 37 bündelt den Laserstrahl auf den Brennpunkt 42 der Linse 37. Die Fadenschneideinrichtung 17 ist dabei so angeordnet, dass der Faden 30 durch den Brennpunkt 42 läuft. Um den Faden 30 zu schneiden, wird die Laserstrahlquelle 36 von der Steuereinrichtung 51 aktiviert. Von der Laserstrahlquelle 36 aus gesehen hinter dem Faden 30 sind eine Blende 39 und eine Fotodiode 38 angeordnet. Die Fotodiode 38 ermöglicht es, die erfolgreiche Trennung des Fadens durch eine Transmissionsmessung zu überprüfen. Dazu kann nach dem eigentlichen Trennvorgang ein spezielles Abfragesignal von der Laserstrahlquelle erzeugt werden, das Im Falle der erfolgreichen Trennung des Fadens von der Fotodiode 38 erfasst wird.

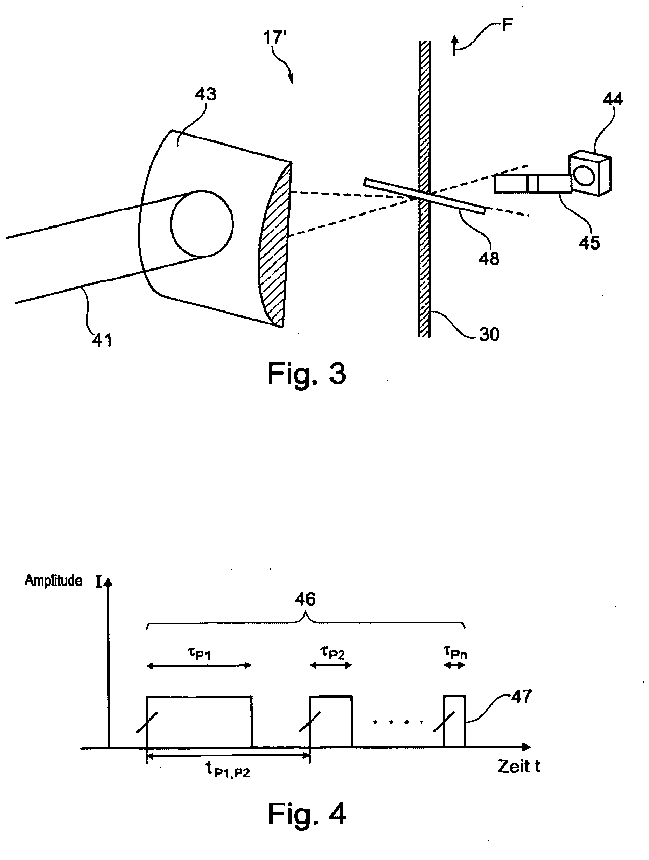

Der Laserstrahl 41 zum Schneiden des Fadens 30 ist vorzugsweise als Laserburst 46 ausgebildet. Zur Erzeugung eines Laserbursts 46 weist die Laserstrahlquelle 37 eine Anschaltelektronik 50 auf. Der zeitliche Verlauf eines solchen Laserbursts 46 ist in Fig. 4 darstellt. Auf den Achsen ist die Zeit t und die Amplitude I aufgetragen. Der Laserburst 46 besteht aus N Laserpulsen 47. Die Laserpulse 47 weisen eine bestimmte Intensität beziehungsweise Amplitude I auf. Die Intensität I berechnet sich dabei aus der Leistung P und der Fläche $A$.

$$I = \frac{P}{A} = \frac{P}{\pi r_0{}^2}$$

Die Fläche A ergibt sich dabei aus dem Durchmesser $2r_0$ des Laserstrahls 41 im Brennpunkt 42. Die Laserpulse 47 können verschiedene Pulsdauern $\tau_{P1}, \tau_{P2}, \tau_{PN}$ und verschiedene Interpulsabstände $t_{P1, P2}$ aufweisen.

Die Fig. 3 zeigt eine alternative Fadenschneideinrichtung 17'. Die Laserstrahlquelle 37 ist entsprechend der Fig. 2 aufgebaut und an dieser Stelle nicht erneut dargestellt. Bei der Fadenschneideinrichtung 17' wird der kollimierte Laserstrahl 41 nicht mittels einer sphärischen Linse 37 gebündelt, sondern mittels einer Zylinderlinse 43. Dadurch wird der Laserstrahl nicht auf einen Brennpunkt 42, sondern auf eine Brennlinie 48 gebündelt. Die Brennlinie 48 ist senkrecht zum laufenden Faden 30 angeordnet. Die Anordnung weist außerdem eine Schlitzblende 45 und eine Fotodiode 44 zur Durchführung einer Transmissionsmessung zur Überprüfung der erfolgreichen Trennung des Fadens 30 auf.

Die Fadenschneideinrichtungen 17, 17' mit einem Laser, wie sie in den Figuren 2 und 3 dargestellt sind, können nicht nur als Teil des Gamreinigers verwendet werden, sondern beispielsweise auch für die Schneideinrichtungen der Spleißeinrichtung 13. Solche Fadenschneideinrichtungen können ebenfalls in anderen Vorrichtungen zum Einsatz kommen, die einen laufenden Faden führen, wie beispielsweise einer Offenend-Rotorspinnmaschine oder In entsprechenden Laborgeräten.

Gemäß einer Weiterbildung der Erfindung ist es auch möglich, eine Schneidrichtung mit einer Laserstrahlquelle 36 mit einer Messeinrichtung, die sich der Laserstrahlquelle 36 bedient, zu kombinieren. Dazu kommen zum Beispiel Messeinrichtungen in Frage, die die Geschwindigkeit des laufenden Fadens mittels des Laser-Doppler-Anemometrie-Verfahrens ermitteln. Sowohl zum Schneiden als auch zum Messen wird die gleiche Laserstrahlquelle 36 verwendet. Vorzugsweise wird die Laserstrahlquelle 36 zum Schneiden in einem Puls-Betrieb betrieben und zum Messen in einen kontinuierlichen Betrieb umgeschaltet. Eine solche Einrichtung ist besonders vorteilhaft in Verbindung mit einem Gamreiniger, da aus der Geschwindigkeit die Länge der ermittelten Gamfehler bestimmt werden kann.

**Patentansprüche**

1. Verfahren zum Schneiden eines laufenden Fadens (30), **dadurch gekennzeichnet,**
   **dass** ein zeitlich gepulster Laserstrahl (41) mittels eines optischen Elementes (37, 43) räumlich gebündelt wird,
   **dass** der laufende Faden (30) durch den Bereich (42, 48) geführt wird, auf den der Laserstrahl (41) gebündelt wird und
   **dass** der zeitlich gepulste Laserstrahl (41) als Laserburst ausgebildet ist und die Form des Laserbursts (46) in Abhängigkeit von den Eigenschaften des Fadens (30) angepasst wird.

2. Verfahren nach Anspruch 1, **dadurch gekennzeichnet,**
   **dass** das optische Element (37) den Laserstrahl (41) auf einen Brennpunkt (42) bündelt und der laufende Faden (30) durch den Brennpunkt (42) geführt wird.

3. Verfahren nach Anspruch 1, **dadurch gekennzeichnet,**
   **dass** das optische Element (43) den Laserstrahl (41) auf eine Brennlinie (48) bündelt und der laufende Faden (30) die Brennlinie (48) kreuzt.

4. Verfahren nach einem der vorherigen Ansprüche, **dadurch gekennzeichnet, dass** der Laserstrahl (41) vor dem Bündeln kollimiert wird.

5. Verfahren nach einem der vorherigen Ansprüche, **dadurch gekennzeichnet, dass** die Zentralwellenlänge des Laserstrahls (41) im Bereich des ultravioletten, des sichtbaren oder des infraroten Teils des elektromagnetischen Spektrums liegt.

6. Verfahren nach einem der vorherigen Ansprüche, **dadurch gekennzeichnet, dass** von dem Faden gestreute Laserstrahlen (41) erfasst werden.

7. Verfahren nach einem der vorherigen Ansprüche, **dadurch gekennzeichnet, dass** eine die Qualität des laufenden Fadens (30) repräsentierende Messgröße laufend erfasst wird und der Faden (30) in Abhängigkeit von Abweichungen der Messgröße von vorgegebenen Werten mittels des Laserstrahls (41) geschnitten wird.

8. Vorrichtung mit Mitteln zur Führung und zum Schneiden eines laufenden Fadens,
   **dadurch gekennzeichnet,**
   **dass** die Mittel zum Schneiden des laufenden Fadens (30) eine Laserstrahlquelle (36) und ein optisches Element (37, 43) umfassen, wobei die Laserstrahlquelle (36) und das optische Element (37, 43) so angeordnet und ausgebildet sind, dass ein von der Laserstrahlquelle (36) ausgesendeter Laserstrahl (41) von dem optischen Element (37, 43) gebündelt wird, dass die Mittel zur Führung des laufenden Fadens (30) dazu ausgebildet sind, den laufenden Faden durch den Bereich (42, 48) zu führen, auf den der Laserstrahl (41) gebündelt wird,
   **dass** eine Steuereinrichtung (51) dazu ausgebildet ist, bei Bedarf die Laserstrahlquelle (36) zu aktivieren, um den Faden (30) zu schneiden und dass die Laserstrahlquelle (36) eine Anschaltelektronik (50) aufweist, die zur Erzeugung eines Laserbursts (46), das heißt, eines zeitlich gepulsten Laserstrahls (41), ausgebildet ist und
   **dass** die Anschaltelektronik (50) zur Einstellung der Form des Laserbursts (46) ausgebildet ist.

9. Vorrichtung nach Anspruch 8, **dadurch gekennzeichnet, dass** das optische Element eine sphärische Linse (37) umfasst.

10. Vorrichtung nach Anspruch 8, **dadurch gekennzeichnet, dass** das optische Element eine Zylinderlinse (43) umfasst.

11. Vorrichtung nach einem der Ansprüche 8 bis 10, **dadurch gekennzeichnet, dass** die Vorrichtung einen Kollimator (40) umfasst, wobei die Laserstrahlquelle (36), der Kollimator (40) und das optische Element (37, 43) so angeordnet und ausgebildet sind, dass ein von der Laserstrahlquelle (36) ausgesendeter Laserstrahl (41) von dem Kollimator (4) kollimiert und der kollimierte Laserstrahl (41) von dem optischen Element (37, 43) gebündelt wird.

12. Vorrichtung nach einem Ansprüche 8 bis 11, **dadurch gekennzeichnet, dass** auf der dem optischen Element (37, 43) abgewandten Seite des Bereichs, auf den der Laserstrahl (41) gebündelt wird, ein lichtempfindlicher Empfänger (38, 44) angeordnet ist.

13. Vorrichtung nach einem der Ansprüche 8 bis 12, **da-**

**durch gekennzeichnet, dass** die Mittel zur Führung des Faden eine Spuleinrichtung (24) zum Wickeln des Fadens (30) auf eine Auflaufspule (11) umfassen.

14. Vorrichtung nach Anspruch 13, **dadurch gekennzeichnet, dass** die Mittel zur Führung des Fadens zum Abziehen des Fadens (30) von einer Ablaufspule (9) ausgebildet sind.

15. Vorrichtung nach einem der Ansprüche 8 bis 14, **dadurch gekennzeichnet, dass** die Vorrichtung einen Garnreiniger (15) zur Erfassung einer die Qualität des laufenden Fadens (30) repräsentierenden Messgröße umfasst und

dass die Steuereinrichtung (51) dazu ausgebildet ist, in Abhängigkeit von Abweichungen der Messgröße von vorgegebenen Werten die Laserstrahlquelle (36) zum Schneiden des Fadens (30) zu aktivieren.

**Claims**

1. Method for cutting a running thread (30), **characterised in that**

a time-pulsed laser beam (41) is spatially focused by means of an optical element (37, 43),

the running thread (30) is guided through the area (42, 48) onto which the laser beam (41) is focused, and

the time-pulsed laser beam (41) is configured as a laser burst and the shape of the laser burst (46) is adapted as a function of the properties of the thread (30).

2. Method according to claim 1, **characterised in that** the optical element (37) focuses the laser beam (41) onto a focal point (42) and the running thread (30) is guided through the focal point (42).

3. Method according to claim 1, **characterised in that** the optical element (43) focuses the laser beam (41) onto a focal line (48) and the running thread (30) crosses the focal line (48).

4. Method according to one of the aforementioned claims, **characterised in that** the laser beam (41) is collimated before focusing.

5. Method according to one of the aforementioned claims, **characterised in that** the central wavelength of the laser beam (41) is in the range of the ultraviolet, visible or infrared part of the electromagnetic spectrum.

6. Method according to one of the aforementioned claims, **characterised in that** laser beams (41) scattered by the thread are detected.

7. Method according to one of the aforementioned claims, **characterised in that** a measurement parameter representing the quality of the running thread (30) is continuously detected and the thread (30) is cut by means of the laser beam (41) as a function of deviations in the measurement parameter from predetermined values.

8. Device with means for guiding and cutting a running thread,

**characterised in that**

the means for cutting the running thread (30) comprise a laser beam source (36) and an optical element (37, 43), the laser beam source (36) and the optical element (37, 43) being arranged and configured such that a laser beam (41) emitted by the laser beam source (36) is focused by the optical element (37, 43),

the means for guiding the running thread (30) are configured to guide the running thread through the area (42, 48) on which the laser beam (41) is focused,

a control device (51) is configured to activate the laser beam source (36) when required in order to cut the thread (30), and

the laser beam source (36) has interface electronics (50) which are designed to generate a laser burst (46), that is to say a time-pulsed laser beam (41), and the interface electronics (50) are designed to adjust the shape of the laser burst (46).

9. Device according to claim 8, **characterised in that** the optical element comprises a spherical lens (37).

10. Device according to claim 8, **characterised in that** the optical element comprises a cylindrical lens (43).

11. Device according to one of claims 8 to 10, **characterised in that** the device comprises a collimator (40), the laser beam source (36), the collimator (40) and the optical element (37, 43) being arranged and configured such that a laser beam (41) emitted by the laser beam source (36) is collimated by the collimator (4) and the collimated laser beam (41) is focused by the optical element (37, 43).

12. Device according to claims 8 to 11, **characterised in that** a photosensitive receiver (38, 44) is arranged on the side of the area which faces away from the optical element (37, 43), on which the laser beam (41) is focused.

13. Device according to one of claims 8 to 12, **characterised in that** the means for guiding the thread comprise a winding device (24) for winding the thread (30) onto a take-up package (11).

14. Device according to claim 13, **characterised in that** the means for guiding the thread are designed to pull the thread (30) off a take-off package (9).

15. Device according to one of claims 8 to 14, **characterised in that**
the device comprises a yarn clearer (15) for detecting a measurement parameter which represents the quality of the running thread (30) and
the control device (51) is configured to activate the laser beam source (36) for cutting the thread (30) as a function of deviations in the measurement parameter from predetermined values.

## Revendications

1. Procédé permettant de couper un fil en mouvement (30), **caractérisé en ce que**
un rayon laser pulsé temporellement (41) est spatialement regroupé en faisceau à l'aide d'un élément optique (37, 43),
le fil en mouvement (30) est guidé à travers la zone (42, 48) sur laquelle le rayon laser (41) est regroupé en faisceau et
le rayon laser pulsé temporellement (41) se présente sous la forme d'une rafale laser pet que la forme de la rafale laser (46) est adaptée en fonction des propriétés du fil (30).

2. Procédé selon la revendication 1, **caractérisé en ce que**
l'élément optique (37) regroupe en faisceau le rayon laser (41) sur un point focal (42) et **en ce que** le fil en mouvement (30) est guidé à travers le point focal (42).

3. Procédé selon la revendication 1, **caractérisé en ce que**
l'élément optique (43) regroupe en faisceau le rayon laser (41) sur une ligne focale (48) et **en ce que** le fil en mouvement (30) croise la ligne focale (48).

4. Procédé selon l'une des revendications précédentes, **caractérisé en ce que** le rayon laser (41) est collimaté avant le regroupement en faisceau.

5. Procédé selon l'une des revendications précédentes, **caractérisé en ce que** la longueur d'onde centrale du rayon laser (41) se situe dans la zone de la partie ultraviolette, visible ou infrarouge du spectre électromagnétique.

6. Procédé selon l'une des revendications précédentes, **caractérisé en ce que** les rayons laser diffusés par le fil (41) sont captés.

7. Procédé selon l'une des revendications précédentes, **caractérisé en ce que** une grandeur de mesure représentant la qualité du fil en mouvement (30) est enregistrée en continu et le fil (30) est coupé à l'aide du rayon laser (41) en fonction des écarts de la grandeur de mesure par rapport aux valeurs prédéfinies.

8. Dispositif avec moyens de guidage et de coupe d'un fil en mouvement,
**caractérisé en ce que**
les moyens de coupe du fil en mouvement (30) comprennent une source de rayon laser (36) et un élément optique (37, 43), sachant que la source de rayon laser (36) et l'élément optique (37, 43) sont conçus et disposés de telle sorte qu'un rayon laser (41) émis par la source de rayon laser (36) est regroupé en faisceau par l'élément optique (37, 43),
les moyens de guidage du fil en mouvement (30) sont conçus pour guider le fil en mouvement à travers la zone (42, 48) sur laquelle le rayon laser (41) est regroupé en faisceau,
un dispositif de commande (51) est conçu pour activer, si nécessaire, la source de rayon laser (36) afin de couper le fil (30) et
la source de rayon laser (36) dispose d'un système électronique de connexion (50) conçu pour générer une rafale laser (46), c'est-à-dire un rayon laser pulsé temporellement (41) et
le système électronique de connexion (50) est conçu pour ajuster la forme de la rafale laser (46).

9. Dispositif selon la revendication 8, **caractérisé en ce que** l'élément optique comprend une lentille sphérique (37).

10. Dispositif selon la revendication 8, **caractérisé en ce que** l'élément optique comprend une lentille cylindrique (43).

11. Dispositif selon l'une des revendications 8 à 10, **caractérisé en ce que**
le dispositif comprend un collimateur (40), sachant que la source de rayon laser (36), le collimateur (40) et l'élément optique (37, 43) sont conçus et disposés de telle sorte qu'un rayon laser (41) émis par la source de rayon laser (36) est collimaté par le collimateur (4) et le rayon laser collimaté (41) est regroupé en faisceau par l'élément optique (37, 43).

12. Dispositif selon l'une des revendications 8 à 11, **caractérisé en ce que** un récepteur photosensible (38, 44) est disposé sur le côté opposé à l'élément optique (37, 43) de la zone sur laquelle le rayon laser (41) est regroupé en faisceau.

13. Dispositif selon l'une des revendications 8 à 12, **caractérisé en ce que** les moyens de guidage du fil comprennent un dispositif de bobinage (24) pour enrouler le fil (30) sur une bobine réceptrice (11).

**14.** Dispositif selon la revendication 13, **caractérisé en ce que** les moyens de guidage du fil sont conçus pour retirer le fil (30) d'une bobine réceptrice (9).

**15.** Dispositif selon l'une des revendications 8 à 14, **caractérisé en ce que** le dispositif comprend un nettoyeur de fil (15) permettant d'enregistrer une grandeur de mesure représentant la qualité du fil en mouvement (30) et le dispositif de commande (51) est conçu pour activer la source de rayon laser (36) afin de couper le fil (30) en fonction des écarts de la grandeur de mesure par rapport aux valeurs prédéfinies.

**Fig. 1**

# Fig. 2

Fig. 3

Fig. 4

**IN DER BESCHREIBUNG AUFGEFÜHRTE DOKUMENTE**

**In der Beschreibung aufgeführte Patentdokumente**

- DE 10050692 A1
- DE 19640184 A1
- DE 19941784 A1